# DEMANDE DE BREVET EUROPEEN

(11) **EP 1 114 714 A2**
(43) Date de publication de la demande: **11.07.2001**
(21) Numéro de dépôt: 00403675.2
(22) Date de dépôt: 26.12.2000
(51) Int. Cl.: B29C 65/20

(54) **Procédé de soudage bout à bout à élément chauffant flottant et dispositif correspondant**

(30) Priorité: 04.01.2000 FR 0000055
(71) Demandeur: SOCIETE JOSEPH SAURON MATERIEL INDUSTRIEL, 91070 Bondoufle (FR)
(72) Inventeur: Sauron, Jean, 91210 Draveil (FR); Gaunt, Gil, 77310 Saint Fargeau Ponthierry (FR)
(74) Mandataire: Lerner, François

(57) **Abrégé**

L'invention concerne le soudage de tubes plastiques (7, 9) aboutés coaxiaux dont on chauffe les extrémités par l'intermédiaire d'un élément chauffant (5), après quoi ces extrémités sont plaquées l'une contre l'autre.

Pendant le rapprochement des tubes en vue de leur chauffage par l'élément chauffant (5), on accorde à ce dernier une liberté de mouvement comprenant : une translation suivant l'axe (19) commun des pièces et au moins deux rotations autour d'axes transversaux à l'axe commun des pièces.

## Description

L'invention se rapporte au soudage de deux surfaces de pièces qui, pour être soudables, comprennent nécessairement une matière plastique dans leur constitution.

Il s'agit de souder bout à bout deux tubes plastiques disposés coaxialement et qui peuvent être en polyéthylène.

Il est connu de souder des pièces plastiques comme décrit dans FR-A-2 691 666 et dans son correspondant américain US-A-5 620 625.

Un dispositif de soudage typique est par ailleurs également décrit dans EP-B-453 903, ce dispositif comprenant :
-- des premiers moyens de maintien du premier tube et des seconds moyens de maintien du second tube
-- des moyens pour déplacer les premier et second moyens de maintien l'un par rapport à l'autre, suivant un axe commun de translation présentant un sens d'avancement et un sens de recul, de manière à rapprocher ou à écarter coaxialement l'une de l'autre les extrémités en regard des deux tubes maintenus,
-- un élément chauffant monté mobile sur un bâti et adapté pour être interposé, dans une première position, entre les premier et second moyens de maintien, et, dans une seconde position, être écarté latéralement par rapport à l'axe de translation, en retrait des tubes, l'élément chauffant présentant deux faces opposées chauffées situées en regard des extrémités des tubes, dans ladite première position.

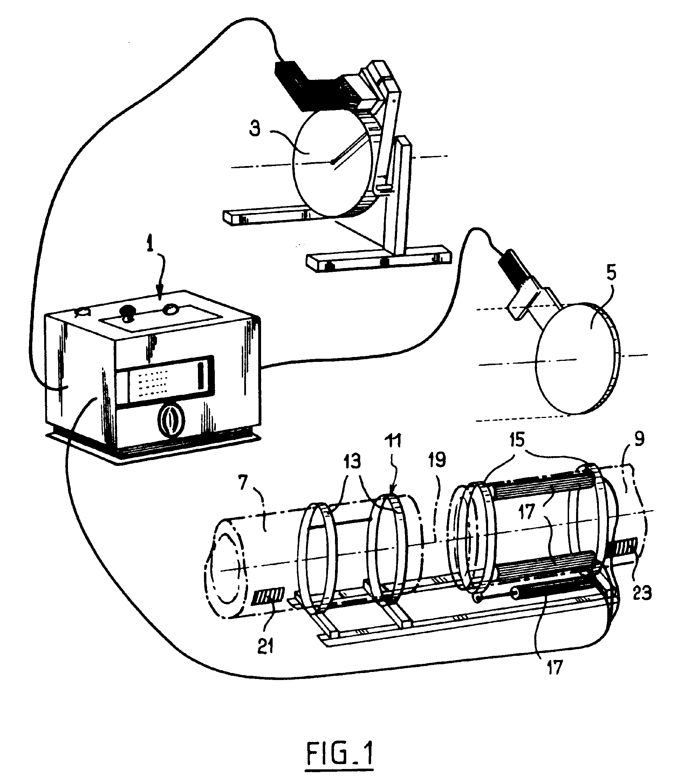

Ainsi, sur la figure 1, on voit illustrée une machine de soudage classique comprenant un boîtier de contrôle 1 lié électriquement à un dispositif de dressage 3 permettant de dresser les extrémités des tubes 7, 9, à souder ensemble, et d'autre part un moyen de chauffage 5 de ces extrémités dressées. Ce moyen de chauffage est souvent appelé "miroir chauffant", et comprend deux faces opposées permettant la fusion de la matière des extrémités des pièces (tubes) situés en regard. Le boîtier 1 est également relié à une unité 17 de vérin du bâti sur lequel les tubes ont été coaxialement installés.

Pour placer en position les pièces (tubes 7 et 9), la machine comprend donc un bâti 11 comportant deux groupes de cerclage 13, 15, équipés de mors de serrage (non représentés). Les cerclages associés à l'unité de vérin 17 permettent de déplacer en translation les deux tubes, dans l'axe 19.

Des machines de ce type sont notamment fabriquées et distribuées par la société "WIDOS" (Schillerstrasse 48, 4-2351 WR. NEUDORF, notamment sous la référence 4400 CNC Unit).

On notera qu'une telle machine permet d'écarter ou de rapprocher les tubes, tout en autorisant la mise en place ou le retrait du dispositif de dressage et du miroir chauffant (voir également brevet publication "KUNSTOFF EN RUBBER" Vol. 43, N° 10, Octobre1990 - ROTTERDAM ; pages 59 - 61 ; J.C. MEIJERINK).

Chacun des deux tubes peut être équipé d'un code d'identification 21, 23 qui peut se présenter comme un badge ou un label fixé au tube, et être du type code-à-barres, voire piste magnétique ou puce électronique notamment.

Grâce à ces codes et à des moyens de lecture et de traitement associés (non représentés), les paramètres de soudage vont pouvoir être automatiquement gérés.

Typiquement, la matière plastique des pièces à souder est du polyéthylène (PEBD, PEHD, PEMD).

Le processus de soudage peut s'opérer comme suit :

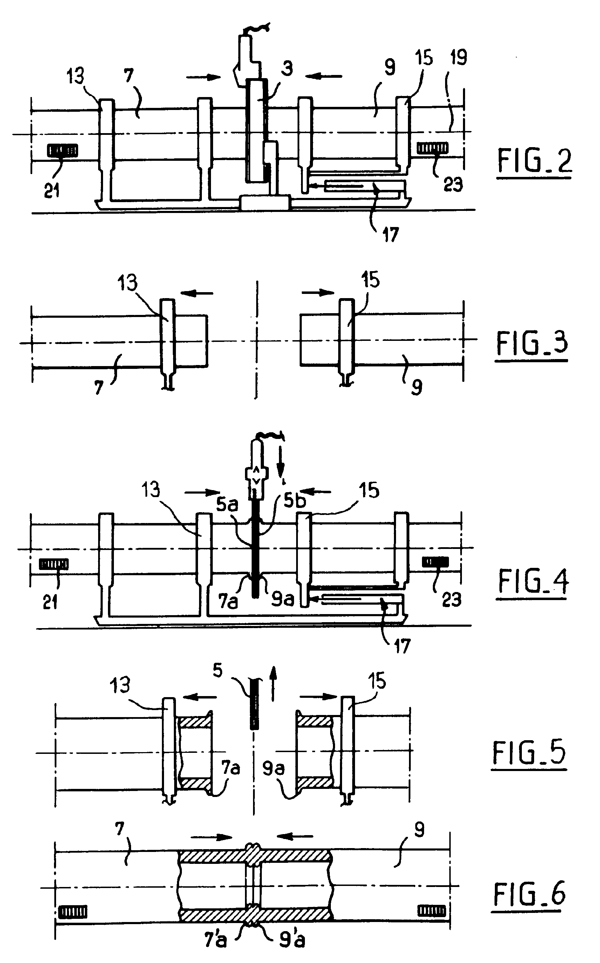

Après mise en place de l'appareil de dressage 3 entre les extrémités correctement alignées et écartées coaxialement des deux tubes, (voir figure 2), l'unité de puissance du boîtier 1 commande le déplacement de l'unité de vérin 17, avec une première mise sous pression convenable des tubes.

Une fois l'opération de dressage/rabotage effectuée, la machine va commander l'écartement coaxial des tubes (figure 3) de manière que l'appareil 3 soit retiré et le miroir chauffant 5 soit introduit à sa place, comme illustré sur la figure 4.

La phase de chauffage va alors être déclenchée, la machine commandant, après mise en température régulée (habituellement de l'ordre de 200°C à 250°C) des deux faces opposées 5a, 5b du miroir 5, la mise en contact sous pression requise des tubes avec ces faces.

La pression et le temps de contact avec le miroir seront suffisants pour que les matières des tubes s'échauffent jusqu'à se fluidifier et à fuser en formant les deux bourrelets 7a, 9a, la pression pouvant être réduite pendant le temps de chauffage avec ramollissement.

A l'issue, la machine commande les vérins pour de nouveau écarter coaxialement les tubes, avec retrait du miroir chauffant (voir figure 5).

Les tubes sont alors de nouveau coaxialement rapprochés et pressés l'un contre l'autre, à l'endroit de leurs extrémités fluidifiées, avec maintien sous pression jusqu'au refroidissement (voir figure 6). Pendant ce temps, les deux bourrelets 7'a, 9'a (plus importants en volume et dimension que les bourrelets 7 et 9) finissent de se former.

Une fois les bourrelets refroidis, les deux tubes sont considérés comme soudés entre eux, bout à bout.

Avec un miroir chauffant de l'art antérieur, un inconvénient réside dans la difficulté à obtenir un soudage réellement satisfaisant, en particulier en cas de non parallélisme des deux surfaces à souder et/ou de non perpendicularité de l'élément chauffant par rapport à l'axe commun de mise en place des pièces, lors du chauffage de ces dernières.

Un objet important de l'invention est ainsi d'améliorer la qualité du soudage, en améliorant le positionnement relatif entre les pièces à souder et l'élément chauffant, lorsqu'il est interposé entre elles.

Ainsi, une caractéristique de l'invention prévoit que l'élément chauffant est monté sur le bâti avec (au moins) deux degrés de liberté de rotation suivant deux axes de rotation, non parallèles entre eux et transversaux à l'axe commun de translation.

En outre et de préférence, la liaison entre le bâti et l'élément chauffant, pour l'articulation de ce dernier suivant ses degrés de liberté de rotation, est située à l'écart de l'axe commun de translation, latéralement par rapport à cet axe, et à distance des tubes. Ainsi, on apporte une solution au problème de la réalisation pratique du système d'articulation compte tenu de la présence dos-à-dos des deux faces chauffantes opposées du miroir.

En plus de cette adaptation angulaire, on conseille aussi une adaptation axiale.

Pour cela, l'invention conseille que, pendant l'étape d'interposition, l'élément chauffant soit positionné axialement et angulairement sous l'effet d'une poussée exercée sur lui par l'un ou l'autre des tubes, de telle sorte que c'est l'action de ces pièces sur l'élément chauffant qui détermine la position finale de celui-ci.

Avantageusement, l'invention prévoit en outre que l'élément chauffant est lié au barreau horizontal d'un « portique » (ou d'une potence) auquel il est suspendu, mobile par l'intermédiaire d'un bras, l'un de ces axes intersectant l'axe commun de translation.

Ainsi, on résoud le problème du positionnement de l'élément chauffant, de préférence vertical au repos, dans la mesure où l'on fait agir la gravité via la suspension de l'élément. A cet égard, une autre caractéristique de l'invention conseille d'ailleurs que :
-- l'un des axes de rotation de l'élément chauffant est un axe vertical, pour compenser une angulation de l'une au moins des pièces par rapport à une horizontale, perpendiculaire à l'axe commun des pièces, et / ou
-- l'autre axe de rotation assure un basculement de l'élément chauffant autour d'un axe horizontal, pour compenser une angulation de l'une au moins des pièces par rapport à une verticale, perpendiculaire à l'axe commun des pièces.

Une description plus détaillée de l'invention va maintenant être fournie en référence aux dessins annexés donnés à titre d'exemple et dans lesquels :
- la figure 1 est une vue schématique d'ensemble d'un dispositif de soudage bout à bout traditionnel,
- les figures 2, 3, 4, 5, 6 illustrent schématiquement les principales étapes pour souder deux tubes aboutés,
- les figures 7, 8, 9 montrent en perspective schématique la translation et les deux rotations possibles de l'élément chauffant,
- la figure 10 montre les deux tubes en coupe verticale, avec une possibilité de translation et de basculement avant/arrière de l'élément chauffant,
- la figure 11 montre les tubes en coupe horizontale, avec une possibilité de translation et de basculement latéral de l'élément chauffant,
- la figure 12 montre plus en détail, en perspective, le bâti support de l'appareil avec son miroir chauffant,
- la figure 13 est une vue en coupe simplifiée, suivant la ligne XIII - XIII, de la figure 12, juste devant l'élément chauffant,
- et la figure 14 est une représentation schématique d'une "vis" pour la rotation de l'élément chauffant.

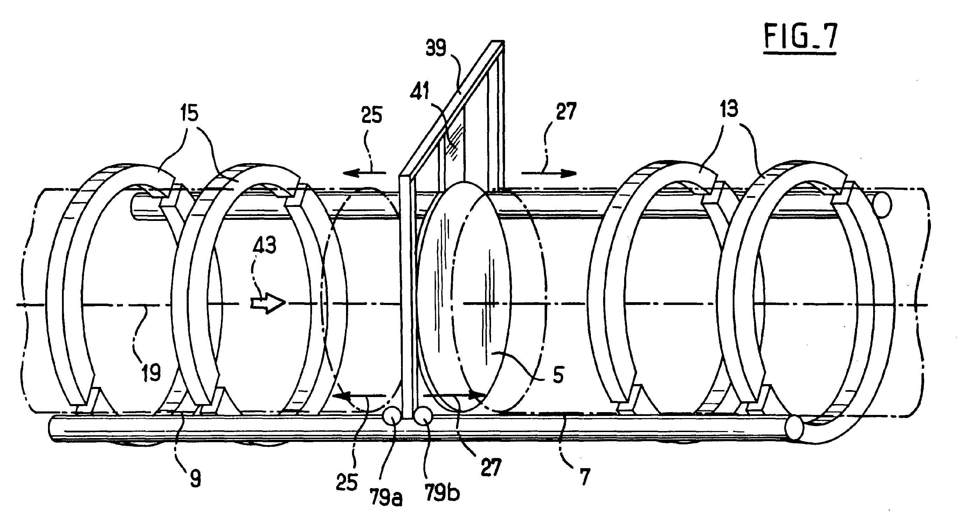

Sur les figures 7, 8 et 9, on voit donc représentés schématiquement trois degrés de liberté que peut avoir l'élément chauffant 5.

Sur la figure 7 tout d'abord (où les deux tubes 7 et 9 à souder bout à bout ont été rappelés en trait fantôme), l'élément chauffant 5 est monté librement mobile en translation suivant (ou parallèlement à) l'axe horizontal commun des tubes, 19 (flèche 25 : recul, flèche 27 : avance).

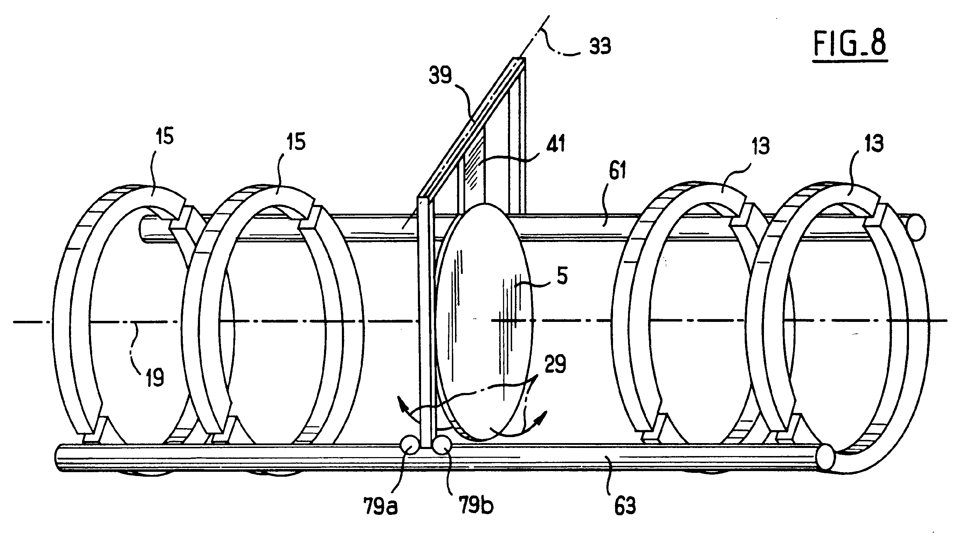

Sur la figure 8, la double flèche 29 montre le possible basculement avant/arrière de l'élément chauffant 5, l'axe de rotation (supposé horizontal) autour duquel ce mouvement de basculement 29 s'opère (axe 33) étant perpendiculaire à l'axe 19 est écarté latéralement de lui.

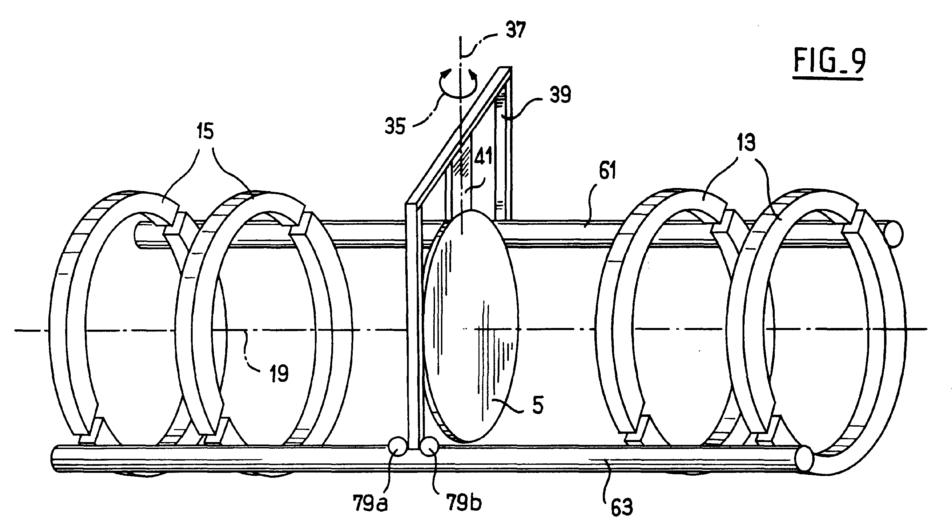

Sur la figure 9, la double flèche 35 autour de l'axe 37 vertical au repos, matérialise la deuxième rotation libre de l'élément chauffant 5.

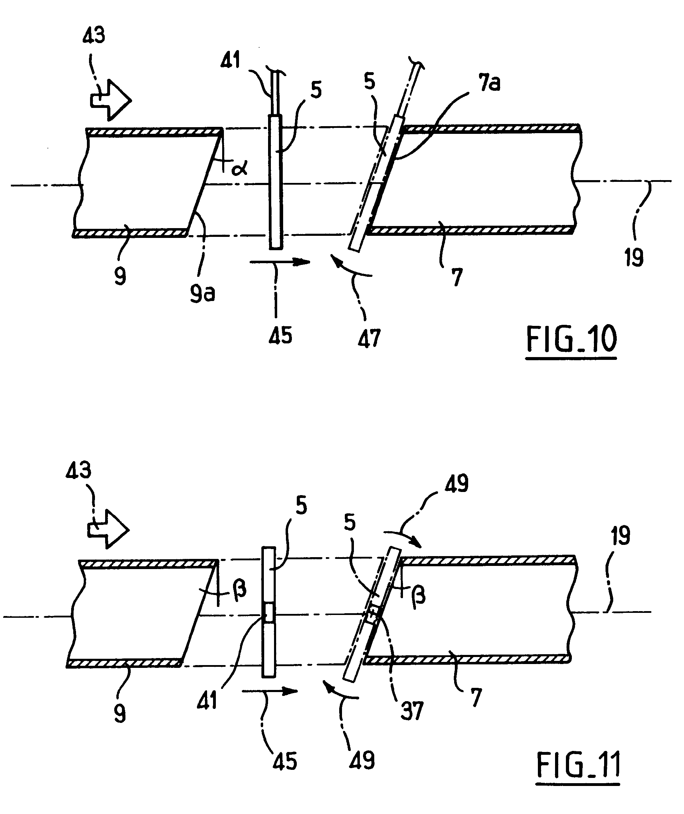

Sur les figures 10 et 11, on voit les deux tubes 7 et 9 alignés suivant l'axe 19, avec le miroir chauffant 5 interposé entre eux.

Le miroir est monté sur un bâti (ou portique) distinct, tel que schématisé en 39 notamment sur les figures 7 à 9, par l'intermédiaire d'un bras de suspension 41.

Sur la figure 10, la vue est prise de côté et l'on constate que les faces d'extrémité (ou d'aboutement) 7a, 9a, des tubes sont inclinées par rapport à la verticale d'un angle α non nul.

Poussé vers l'avant, suivant l'axe 19 par son vérin (schématisé par la flèche 43), le tube mobile 9 avance vers le tube fixe 7, en entraînant coaxialement au passage le miroir chauffant 5, dans le sens de la flèche 45.

Parvenu au contact de la face 7a du tube 7, le tube 9 incline "vers l'arrière" le miroir 5 (alors représenté en trait fantôme), dans le sens de la flèche 47.

Si l'on suppose en outre un défaut de perpendicularité d'un angle β (figure 11) vis-à-vis de ce même axe 19, suivant une coupe faite dans un plan horizontal, le même mouvement de rapprochement des tubes suivant la flèche 43 provoque un pivotement "latéral" du miroir 5 comme le montrent les flèches 49 de la figure 11.

De cette manière, les deux extrémités 7a, 9a, des tubes vont pouvoir être uniformément chauffées.

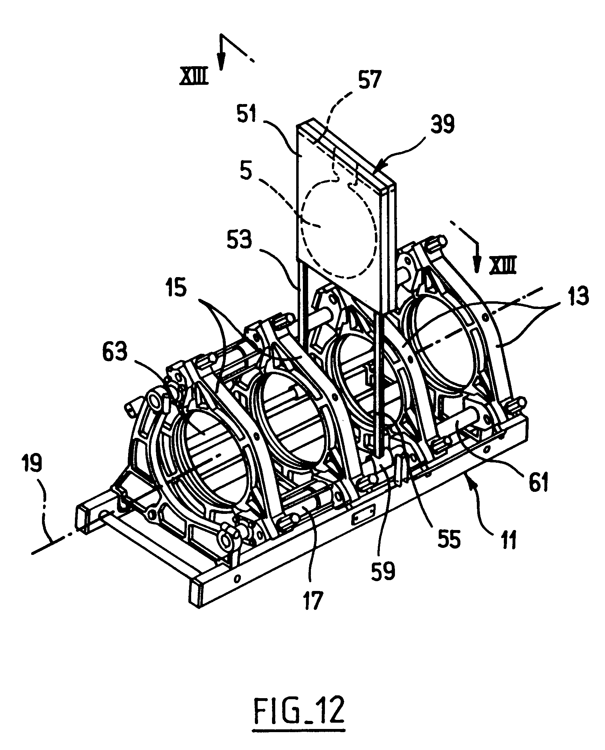

Sur la figure 12, l'élément chauffant 5 est escamoté latéralement par rapport à l'axe 19, à l'écart des tubes. Ici, il est en position haute, au-dessus des cerclages, à l'intérieur d'un boîtier protecteur 51 (solution préférée à un montage sur rotule, dans l'axe 19).

Le portique 39 est interposé verticalement entre les deux unités de cerclage 13 et 15, avec le boîtier protecteur 51 disposé verticalement, à l'extrémité supérieure de deux montants verticaux de guidage 53, 55, le long desquels le barreau horizontal 57 (support de l'élément 5) est monté verticalement coulissant.

A leur extrémité inférieure, les deux montants latéraux 53, 55, sont montés autour de coulisseaux (dont l'un seulement, 59, est montré sur la figure 12) adaptés pour coulisser librement et horizontalement le long des barreaux horizontaux 61, 63, de liaison entre eux des cerclages (il peut s'agir du piston des vérins 17). De cette manière, l'élément chauffant 5 peut se déplacer horizontalement, suivant l'axe 19., sous la poussée des tubes (plus précisément de l'un d'entre eux, en l'espèce).

Pour être ainsi déplacé axialement, l'élément chauffant 5 aura tout d'abord été descendu, suspendu à son barreau-glissière 57, le long des montants verticaux 53, 55.

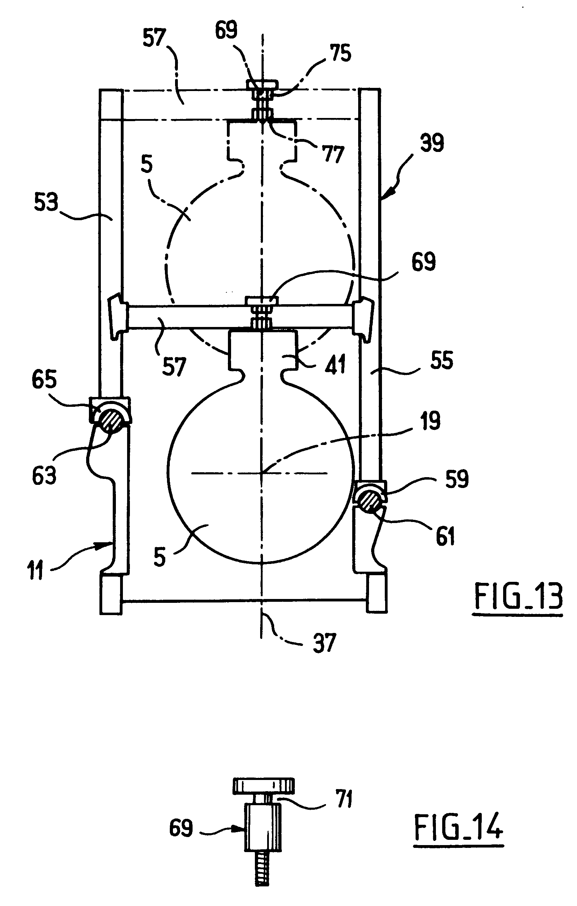

Les positions haute (écarté latéralement de l'encombrement des tubes) et basse de l'élément chauffant 5 apparaissent d'ailleurs, respectivement en trait mixte et en trait plein, sur la figure 13 (boîtier supprimé).

En position basse, le cercle constitué par l'élément chauffant 5 en lui-même est coaxial à l'axe 19.

Sur cette figure 13, on voit en 59 et 65, les coulisseaux de translation axiale de la potence 39 (et donc du miroir 5), le long des tubulures horizontales 61, 63.

Pour les deux rotations (basculement latéral et mouvement pendulaire d'avant en arrière), on peut utiliser une ou plusieurs vis 69 (voir représentation agrandie sur la figure 14) dans l'espace 71 desquelles la barre de suspension 41 est montée tournante autour de l'axe 37.

L'engagement, par l'extérieur, de l'extrémité supérieure de la barre 41 dans la fente 71 de chaque vis permet ce basculement latéral montré sur la figure 9.

Pour la seconde rotation de la figure 8, chaque arbre 69, porté par le barreau 57, traverse ce dernier (alors rond en section) à l'endroit de gorges supérieure 75 et inférieure 77 ménagées deux à deux, l'une sur l'autre, à travers le barreau, avec chacune une longueur compatible avec l'angulation souhaitée.

Ainsi supportée la(chaque) vis 69 dont la tête supérieure ressort et prend appui sur les bords d'une gorge supérieure 73, peut basculer d'avant en arrière comme indiqué par les flèches 29 sur la figure 8, tout en pouvant si nécessaire tourner autour de l'axe 37 qui, même lorsqu'il n'est pas vertical, passe par la barre 41 et l'élément chauffant 5.

Bien que cette solution « à vis » soit favorable et conseillée, d'autres solutions pour l'articulation du miroir chauffant auraient pu être retenues, telles par exemple qu'un système à rotule ou à lame flexible.

Pour la translation axiale, on notera également que l'on a schématisé en 79a, 79b, un système à roulettes qui pourrait remplacer les coulisses 59, 65.

En outre, on aurait pu prévoir une rotation pour permettre au miroir d'évoluer entre sa première position engagée entre les tubes et sa deuxième position escamotée latéralement, à la place d'une translation (cas toutefois moins favorable).

## Revendications

1. Dispositif de soudage, pour le soudage coaxial bout à bout entre eux, de deux tubes (7, 9) en matière plastique, comprenant :
-- des premiers moyens (13) de maintien du premier tube et des seconds moyens (15) de maintien du second tube,
-- des moyens (17) pour déplacer les premier et second moyens de maintien l'un par rapport à l'autre, suivant un axe commun de translation (19) présentant un sens d'avancement et un sens de recul, de manière à rapprocher ou à écarter coaxialement l'une de l'autre les extrémités en regard (7a, 9a) des deux tubes maintenus,
-- un élément chauffant (5) monté mobile sur un bâti (39) et adapté pour être interposé, dans une première position, entre les premier et second moyens de maintien, et, dans une seconde position, écarté latéralement par rapport à l'axe (19) de translation, en retrait des tubes, l'élément chauffant présentant deux faces opposées chauffées (5a, 5b) situées en regard des extrémités (7a, 9a) des tubes dans ladite première position, caractérisé en ce que :
-- l'élément chauffant (5) est monté sur le bâti (39) avec deux degrés de liberté de rotation suivant deux axes (33, 37) de rotation, non parallèles entre eux et transversaux à l'axe (19) commun de translation.

2. Dispositif selon la revendication 1, caractérisé en ce que la liaison entre le bâti (39) et l'élément chauffant (5), pour l'articulation de ce dernier suivant ses degrés de liberté de rotation, est située à l'écart de l'axe (19) commun de translation, latéralement par rapport à cet axe, et à distance des tubes.

3. Dispositif selon la revendication 1 ou 2, caractérisé en ce que l'élément chauffant est lié au barreau horizontal (57) d'un portique (39) auquel il est suspendu, mobile par l'intermédiaire d'un bras (41), l'un de ces axes intersectant l'axe commun de translation (19).

4. Dispositif selon la revendication 3, caractérisé en ce que :
- l'un des axes (37) de rotation de l'élément chauffant (5) est un axe vertical, pour compenser une angulation de l'une au moins des pièces par rapport à une horizontale, perpendiculaire à l'axe (19) commun des pièces, et / ou
- l'autre axe de rotation (33) assure un basculement de l'élément chauffant autour d'un axe horizontal, pour compenser une angulation de l'une au moins des pièces par rapport à une verticale, perpendiculaire à l'axe (19) commun des pièces.

5. Dispositif selon l'une des revendications 2 à 4, caractérisé en ce que l'élément chauffant, ou le portique auquel il est lié,est monté avec une liberté de déplacement (25, 27) sensiblement suivant l'axe de translation (19) par rapport aux moyens de maintien des tubes, sous la poussée de l'un au moins des tubes.
